# EUROPEAN PATENT APPLICATION

(11) **EP 4 718 621 A2**
(43) Date of publication of application: **01.04.2026**
(21) Application number: 26150938.4
(22) Date of filing: 16.06.2022
(51) Int. Cl.: H01M 50/534

(54) **ELECTRODE TAB ASSEMBLY AND SECONDARY BATTERY INCLUDING THE SAME**

(30) Priority: 18.06.2021 KR 20210079631; 14.06.2022 KR 20220072368
(62) Divisional of application: 22825364.7
(71) Applicant: LG Energy Solution, Ltd., Seoul 07335 (KR)
(72) Inventor: Ha Na, LEE, Daejeon (KR)
(74) Representative: Goddar, Heinz J.

(57) **Abstract**

An electrode tab assembly of the present invention includes: an electrode tab; and a reinforcing member provided on a side portion of the electrode tab in a width direction to reinforce strength of the side portion of the electrode tab, thereby preventing the electrode tab from being deformed.

## Description

### TECHNICAL FIELD

### CROSS-REFERENCE TO RELATED APPLICATION

The present application claims the benefit of the priority of Korean Patent Application Nos. 10-2021-0079631, filed on June 18, 2021, and 10-2022-0072368, filed on June 14, 2022, which are hereby incorporated by reference in their entirety.

### TECHNICAL FIELD

The present invention relates to an electrode tab assembly and a secondary battery including the same, and more particularly, to an electrode tab assembly capable of preventing an electrode tab from being deformed and a secondary battery including the same.

### BACKGROUND ART

In general, secondary batteries mean batteries that are chargeable and dischargeable unlike primary batteries that are not chargeable, and the secondary batteries are widely used in electronic devices such as mobile phones, notebook computers, camcorders, and the like, electric vehicles, or the like. Particularly, since a lithium secondary battery has larger capacity than a nickel-cadmium battery or a nickel-hydrogen battery and has a high energy density per unit weight, a degree of its utilization is rapidly increasing.

Such a secondary battery is classified into a can type secondary battery in which an electrode assembly is built in a metal can and a pouch type secondary battery in which an electrode assembly is built in a pouch. The can type secondary battery includes an electrode assembly, a can accommodating the electrode assembly, and a cap assembly mounted in an opening of the can. The electrode assembly has a structure in which an electrode and a separator are wound in a jelly-roll form. The electrode includes a positive electrode and a negative electrode. The positive electrode is connected to a cap assembly through a positive electrode tab, and the negative electrode is connected to a can through a negative electrode tab. Here, the positive electrode tab and the negative electrode tab are provided as electrode tabs.

The secondary battery having such a structure has a problem in that the electrode tab is folded during a transfer process or depending on an evaluation angle when a manufacturing process is performed, or safety is evaluated, or the electrode tab is in contact with an electrode/destroyed, resulting in short circuit, explosion, and ignition.

### DISCLOSURE OF THE INVENTION

### TECHNICAL PROBLEM

The present invention is to solve the above problem, and an object of the present invention is to provide a secondary battery, in which a structure of an electrode tab is improved to reinforce strength of the electrode tab, thereby preventing the electrode tab from being deformed such as being folded or destroyed, resulting in preventing short circuit, explosion, and ignition from occurring, and a secondary battery including the same.

### TECHNICAL SOLUTION

An electrode tab assembly of the present invention for achieving the above object includes: an electrode tab; and a reinforcing member provided on a side portion of the electrode tab in a width direction to reinforce strength of the side portion of the electrode tab, thereby preventing the electrode tab from being deformed.

The reinforcing member may include one reinforcing piece and the other reinforcing piece, which are respectively provided at front and rear sides of the side portion of the electrode tab and coupled to each other to surround the side portion of the electrode tab so that the electrode tab increases in thickness.

The one reinforcing piece and the other reinforcing piece may have a symmetrical shape with respect to the electrode tab.

The one reinforcing piece may include a front surface provided at a front side of the side portion, one top surface provided at one side of the side portion, one bottom surface provided at one side of a bottom surface of the side portion, and one side surface provided at one side of a side surface of the side portion, and the other reinforcing piece may include a rear surface provided at a rear surface of the side portion, the other top surface provided at the other side of the side portion, the other bottom surface provided at the other side of the bottom surface of the side portion, and the other side surface provided at the other side of the side surface of the side portion.

The one top surface and the other top surface may be coupled to each other to cover the top surface of the side portion, the one bottom surface and the other bottom surface may be coupled to each other to cover the bottom surface of the side portion, and the one side surface and the other side surface may be coupled to each other to cover the side surface of the side portion.

The electrode tab may include a central portion and a side portion provided at each of both sides of the central portion in a full width direction of the central portion, wherein the side portion may have a tapered shape having a thickness that gradually decreases from the inside to the outside, which are connected to the central portion.

The electrode tab may include a central portion and a side portion provided at each of both sides of the central portion in a full width direction of the electrode tab, wherein the side portion may have a size less than that of the central portion in a full length and thickness direction of the central portion.

An outer surface of the reinforcing member provided on the side portion and an outer surface of the central portion may be provided on the same horizontal line.

One or more insertion holes may be formed in the side portion of the electrode tab, and the reinforcing member may be provided with an insertion protrusion which is inserted into each of the insertion holes.

The reinforcing member may have strength greater than that of the electrode tab.

The reinforcing member may be made of any one material of an insulating material and a flexible material.

The reinforcing member may be made of a material having a thickness greater than that of the electrode tab.

The reinforcing member may be provided on one surface of the side portion of the electrode tab to increase in thickness of the side portion of the electrode tab, thereby reinforcing strength of the electrode tab.

The reinforcing member may include one front surface attached to a front side of the side portion, one top surface attached to a top surface of the side portion, and one bottom surface attached to a bottom surface of the side portion, and one side surface provided on a side surface of the side portion.

A secondary battery of the present invention may include the electrode tab assembly.

### ADVANTAGEOUS EFFECTS

The electrode tab assembly of the present invention is characterized by including a reinforcing member provided at a side portion of the electrode tab. Due to such a feature, the strength of the side portion of the electrode tab may be reinforces, and thus, the electrode tab may be prevented from being deformed such as being folded or destroyed, thereby preventing the secondary battery including the electrode tab assembly from being short-circuited, exploded, and ignited.

Particularly, in the electrode tab assembly of the present invention, the electrode tab may include the side portion. The side portion may have a tapered shape or has a size less than the overall length and thickness of the central portion. Due to this feature, the reinforcing member provided on the side portion and the surface of the central portion may be aligned on the same horizontal line to prevent the height difference from occurring between the reinforcing member and the central portion, thereby improving the adhesion and bonding force between the electrode tab assembly and the electrode.

### BRIEF DESCRIPTION OF THE DRAWINGS

FIG. 1 is a cross-sectional view of a secondary battery according to a first embodiment of the present invention.
FIG. 2 is a perspective view of an electrode tab assembly according to a second embodiment of the present invention.
FIG. 3 is a front view of the electrode tab assembly according to the first embodiment of the present invention.
FIG. 4 is a side view of the electrode tab assembly according to the first embodiment of the present invention.
FIG. 5 is a plan view of the electrode tab assembly according to the first embodiment of the present invention.
FIG. 6 is a cross-sectional view taken along line A-A of FIG. 3.
FIG. 7 is a front view of an electrode tab assembly according to a second embodiment of the present invention.
FIG. 8 is a plan view of the electrode tab assembly according to the second embodiment of the present invention.
FIG. 9 is a front view of an electrode tab assembly according to a third embodiment of the present invention.
FIG. 10 is a plan view of the electrode tab assembly according to the third embodiment of the present invention.
FIG. 11 is a front view of an electrode tab assembly according to a fourth embodiment of the present invention.
FIG. 12 is a cross-sectional view taken along line B-B of FIG. 11.
FIG. 13 is a perspective view of an electrode tab assembly according to a fifth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

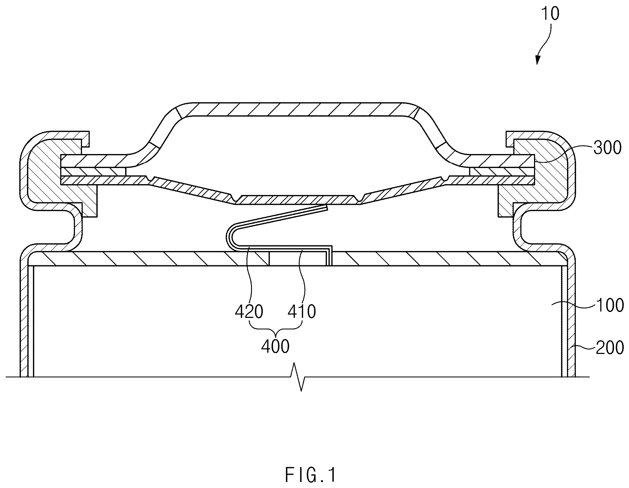

As illustrated in FIG. 1, a secondary battery 10 according to a first embodiment of the present invention is a cylindrical secondary battery and includes an electrode assembly 100, a can 200 accommodating the electrode assembly 100, and a cap assembly 300 mounted in an opening of the can 200. In addition, the electrode assembly 100 has a structure in which an electrode 110 and a separator are stacked and wound in a jelly-roll form. Here, the electrode 110 includes a positive electrode and a negative electrode.

The positive electrode is connected to the cap assembly 300 through a positive electrode tab assembly, and the negative electrode is connected to the can 200 through a negative electrode tab assembly. The positive electrode tab assembly and the negative electrode tab assembly constitute an electrode tab assembly, and the electrode tab assembly is coupled to a non-coating portion of the electrode without an electrode active material through welding.

The secondary battery 10 has a problem in that deformation such as folding or destruction of the electrode tab assembly occurs during a manufacturing process or a safety evaluation process. Particularly, when the destroyed electrode tab assembly and the electrode 110 having a different polarity are in contact with each other, there is a problem in that short circuit, explosion, and ignition occur.

In order to solve this problem, the secondary battery 10 according to the first embodiment of the present invention may improve the electrode tab assembly to reinforce strength, thereby preventing the electrode tab assembly from being deformed such as being folded or destroyed, resulting in previously preventing accidents such as the short circuit, the explosion, and the ignition due to the electrode tab assembly from occurring.

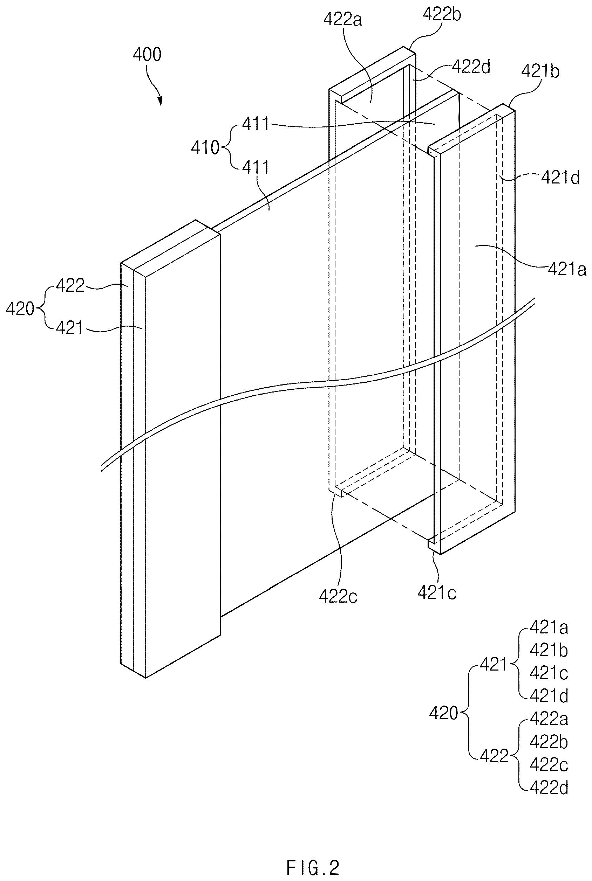

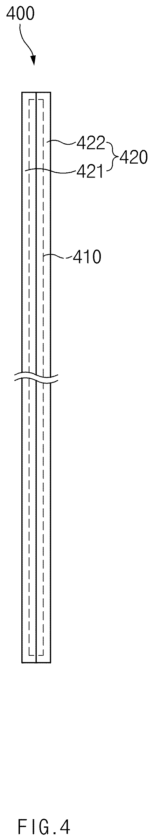

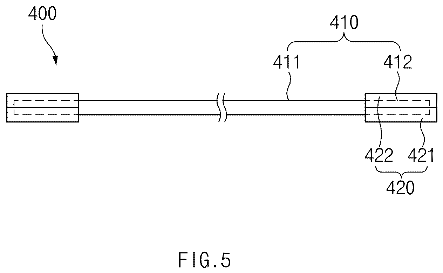

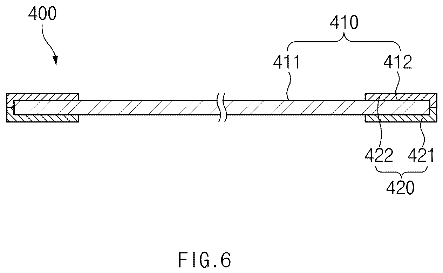

That is, as illustrated in FIGS. 2 to 6, the electrode tab assembly 400 according to the first embodiment of the present invention includes an electrode tab 410 and a reinforcing member 420 reinforcing the strength of the electrode tab 410.

The electrode tab 410 is configured to connect the positive electrode, which is an electrode, to the cap assembly, or connect the negative electrode, which is the electrode, to the can 200. That is, the electrode tab 410 is coupled to the non-coating portion of the electrode 110 through the welding. The electrode tab 410 may be made of a metal material, and preferably, the electrode tab 410 may be made of an aluminum (Al) or nickel (Ni) material.

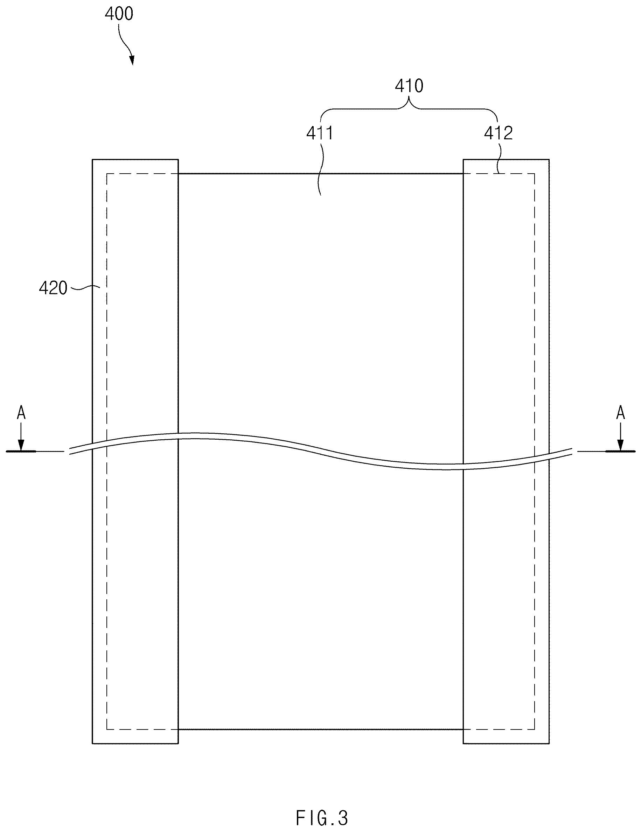

The reinforcing member 420 is configured to reinforce the strength of the side portion 412 of the electrode tab 410 to prevent the electrode tab 410 from being deformed such as being folded or destroyed. That is, the reinforcing member 420 is provided on each of the side portions (left and right portions of the electrode tab when viewed in FIG. 3) in a full width direction of the electrode tab 410, and the side portion of the electrode tab may increase in thickness to reinforce the strength of the electrode tab 410, thereby preventing the electrode tab 410 from being deformed.

That is, the reinforcing member 420 may be provided in a shape that surrounds the side portion 412 of the electrode tab 410 to reinforce the strength of the side portion 412 of the electrode tab 410 by a thickness of the reinforcing member 420.

Particularly, the reinforcing member 420 may be made of a material having elasticity and restoring force. Accordingly, even if the electrode tab 410 is deformed, the electrode tab 410 may be restored to its original shape by the reinforcing member 420 to prevent the electrode tab 410 from being deformed.

The electrode tab assembly 400 having such a structure may be connected to the electrode through the central portion 411 of the electrode tab 410, and the strength of the side portion of the electrode tab 410 may be reinforced through the reinforcing member provided on the side portion 412 of the electrode tab 410 to prevent the electrode tab 410 from being deformed such as being folded or destroyed.

In more detail, even if the side portion 412 of the electrode tab assembly 400 is caught on an external object during the manufacturing process or the safety evaluation process of the electrode assembly 100, since the strength of the side portion 412 of the electrode tab 410 is reinforced by the reinforcing member 420, the electrode tab 410 may be prevented from being deformed as being folded or destroyed.

The reinforcing member 420 has a structure that is capable of being conveniently coupled to the side portion 412 of the electrode tab 410.

That is, the reinforcing member 420 includes one reinforcing piece 421 and the other reinforcing piece 422, which are respectively provided at front and rear sides of the side portion 412 of the electrode tab 410 and then coupled to each other to increase in thickness of the side portion 412 of the electrode tab 410, thereby reinforcing the strength of the electrode tab 410. The one reinforcing piece 421 and the other reinforcing piece 422 may reinforce the strength of the side portion 412 of the electrode tab 410 while being coupled to surround the side portion 412 of the electrode tab 410.

Here, the one reinforcing piece 421 and the other reinforcing piece 421 and 422 may have a symmetrical shape with respect to the electrode tab 410. This may be improved in ease and compatibility of manufacturing the reinforcing member 420. On the other hand, the one reinforcing piece 421 and the other reinforcing piece 422 may be bonded to each other through thermal fusion or an adhesive.

That is, the one reinforcing piece 421 includes a front surface 421a provided in front of the side portion 412, one top surface 421b provided at one side of a top surface of the side portion 412, one bottom surface 421c provided at one side of a bottom surface of the side portion 412, and one side surface 421d provided at one side of the side surface of the side portion 412.

In addition, the other reinforcing piece 422 includes a rear surface 422a provided behind the side portion 412, the other top surface 422b provided at the other side of the top surface of the side portion 412, the other bottom surface 422c provided at the other side of the bottom surface of the side portion 412, and the other side surface 422d provided at the other side of the side surface of the side portion 412.

Thus, when the one reinforcing piece 421 and the other reinforcing piece 422 are coupled to each other, the front surface 421a may reinforce strength of a front side of the electrode tab 410 while covering the front side of the electrode tab 410, the rear surface 422a may reinforce strength of a rear side of the electrode tab 410 while covering the rear side of the electrode tab 410. Also, the one top surface 421b and the other top surface 422b are coupled to each other to reinforce strength of a top surface of the side portion 412 while covering the top surface of the side portion 412, the one bottom surface 421c and the other bottom surface 422c are coupled to each other to reinforce strength of a bottom surface of the side portion 412 while covering the bottom surface of the side portion 412, and the one side surface 421d and the other side surface 422d are coupled to each other to reinforce strength of a side surface of the side portion 412 while covering the side surface of the side portion 412.

Accordingly, the reinforcing member 420 may increase in thickness of the side portion 412 of the electrode tab 410 to stably cover the side portion of the electrode tab, thereby improving the strength of the electrode tab 410.

The reinforcing member 420 may be made of an insulating material and a flexible material. That is, the insulating material may block electricity from passing by the reinforcing member 420, and as a result, safety may be improved. The flexible material may prevent the reinforcing member 420 from being destroyed by an external object, and in particular, even if the electrode tab 410 to which the reinforcing member 420 is coupled is deformed, the electrode tab 410 may be restored to its original shape by restoring force of the reinforcing member 420, and as a result, the electrode tab 410 may be largely prevented from being deformed.

For example, the reinforcing member 420 may be made of a polymer material, and the polymer material may be polypropylene or polyethylene oxide. The reinforcing member 420 is made of any one of polypropylene, polyethylene oxide, polyethylene, ethylene vinyl acetate, and rubber and also is used only as a single material.

The reinforcing member 420 may be made of the same material as the electrode tab 410 to reinforce the strength of the electrode tab and increase in adhesion area between the electrode tab and an electrode lead, thereby preventing the conductivity from being weakened.

The one reinforcing piece 421 and the other reinforcing piece 422 may be detachably coupled to the electrode tab 410. That is, a groove and a protrusion, which are coupled to each other, may be provided on a corresponding surfaces of the one reinforcing piece 421 and the other reinforcing piece 422. In other words, the groove may be provided in the corresponding surface of the one reinforcing piece, and the protrusion coupled to the groove of the one reinforcing piece may be provided on the corresponding surface of the other reinforcing piece. Thus, when transferring the electrode assembly, the reinforcing member is coupled to the electrode tab to prevent the electrode tab from being deformed, and when the electrode assembly is accommodated in the can, the reinforcing member coupled to the electrode tab is detached to prevent accidents that may occur due to the reinforcing member from occurring.

The reinforcing member and the electrode tab may be coupled to each other by thermal fusion.

The reinforcing member 420 may be made of a material having strength greater than that of the electrode tab 410. That is, if the material is stronger than the electrode tab, the material may be used for the reinforcing member. A manufacturing cost may be greatly reduced.

The reinforcing member 420 may be provided to be thicker than the electrode tab 410. For example, the reinforcing member 420 may be provided to have a thickness of 1.1 times to 2 times the thickness of the electrode tab 410. Thus, the thickness of the side portion of the electrode tab 410 may effectively increase to reinforce the strength.

Therefore, the secondary battery 10 according to the first embodiment of the present invention may include the electrode tab assembly 400 provided with the electrode tab 410 and the reinforcing member 420 to increase in thickness of the electrode tab 410, thereby reinforcing the strength. Therefore, the electrode tab 410 may be prevented from being deformed, and as a result, the safety may be improved.

Hereinafter, in descriptions of another embodiment of the present invention, constituents having the same function as the above-mentioned embodiment have been given the same reference numeral in the drawings, and thus duplicated description will be omitted.

### [Secondary battery according to second embodiment of the present invention]

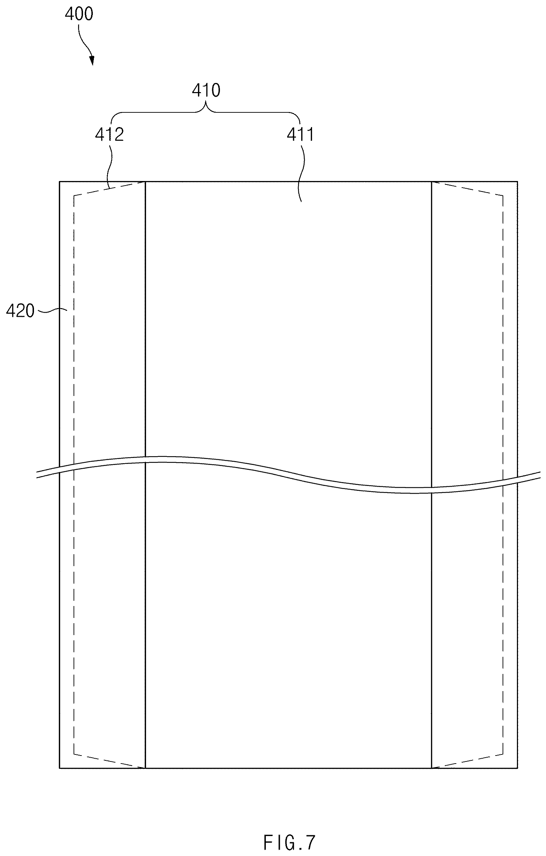

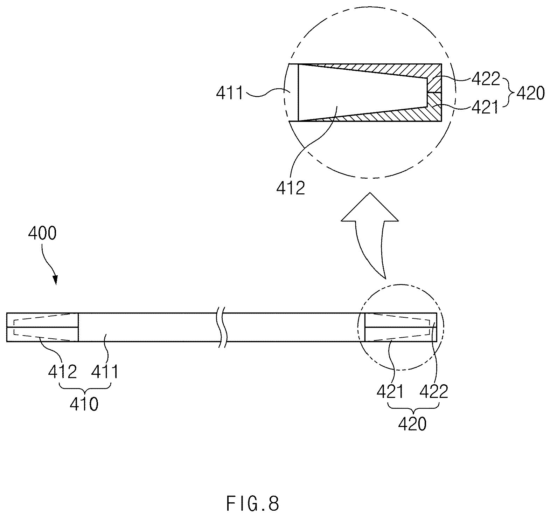

As illustrated in FIGS. 7 and 8, a secondary battery 10 according to a second embodiment of the present invention includes an electrode tab assembly 400. The electrode tab assembly 400 includes an electrode tab 410 and a reinforcing member 420 provided on a side portion 412 of the electrode tab 410.

The electrode tab 410 includes a central portion 411 and a side portion 412 provided at each of both sides of the central portion 411 in a full width direction of the central portion 411. The side portion 412 has a tapered shape in which a length and thickness of the central portion 411 gradually decrease from the inside to the outside, which are connected to the central portion 411.

That is, referring to FIG. 7, each of an upper end and a lower end of the side portion 412, which are connected to an upper end and a lower end in the full length direction of the central portion 411 is tapered to gradually decrease in width from the inside to the outside (a direction of the side portion when viewed in FIG. 7). In addition, referring to FIG. 8, each of front and rear sides of the side portion 412, which are respectively connected to a front surface 421a and a rear surface 422a, has a tapered shape having a thickness (length between the front and rear sides of the side portion 412) that gradually decreases from the inside to the outside.

In other words, the reinforcing member is coupled to an empty space that is formed because the side portion 412 is provided to have a size less than that of the central portion 411, and thus, the electrode tab assembly 400 may be prevented from increasing in thickness by the reinforcing member 420.

Here, the reinforcing member 420 is made of a material having greater strength than that of the electrode tab.

Particularly, an outer surface of the reinforcing member 420, which is provided on the side portion 412, and an outer surface of the central portion 411, which correspond to each other, may be provided on the same horizontal line, and thus, since a height different between the central portion 411 and the reinforcing member 420 does not exist, adhesion and bonding force between the electrode tabs 410 and the electrodes may be improved.

In the second embodiment of the present invention, it has been described that the side portion 412 is formed in the tapered shape, but the side portion 412 may also be formed in a triangular pyramid shape that decreases in width from the inside to the outside, which are connected to the central portion 411.

### [Secondary battery according to third embodiment of the present invention]

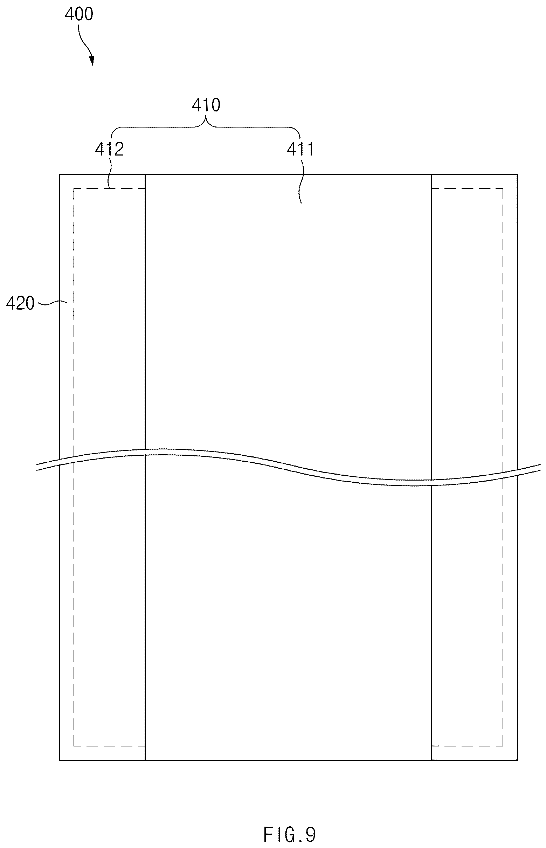

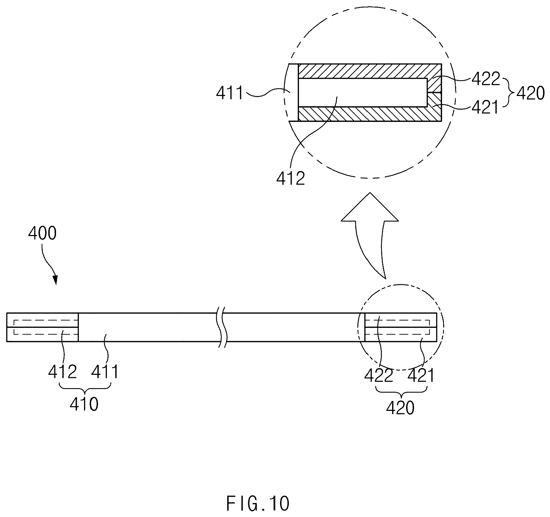

As illustrated in FIGS. 9 and 10, a secondary battery 10 according to a third embodiment of the present invention includes an electrode tab assembly 400. The electrode tab assembly 400 includes an electrode tab 410 and a reinforcing member 420 provided on a side portion 412 of the electrode tab 410.

Here, the electrode tab 410 includes a central portion 411 and a side portion 412 provided on each of both sides of the central portion 411 in a full width direction of the central portion 411. Here, the side portion 412 includes the central portion 411 having a size less than that in the full length and thickness direction of the central portion 411.

That is, when viewed in the full length direction of the electrode tab 410, each of upper and lower ends of the side portion 412 has a length less than that of each of upper and lower ends of the central portion 411, and when viewed in the thickness direction of the electrode tab 410, the side portion 412 has a thickness less than that of the central portion 411.

Accordingly, the reinforcing member is coupled to an empty space that is formed because the side portion 412 is provided to have a size less than that of the central portion 411, and thus, the electrode tab assembly 400 may be prevented from increasing in thickness by the reinforcing member 420.

Here, the reinforcing member is made of a material having greater strength than that of the electrode tab.

Particularly, an outer surface of the reinforcing member 420, which is provided on the side portion 412, and an outer surface of the central portion 411, may be provided on the same horizontal line, and thus, since a height different between the central portion 411 and the reinforcing member 420 does not exist, adhesion force between the electrode tabs 410 and the electrodes may be improved.

### [Secondary battery according to fourth embodiment of the present invention]

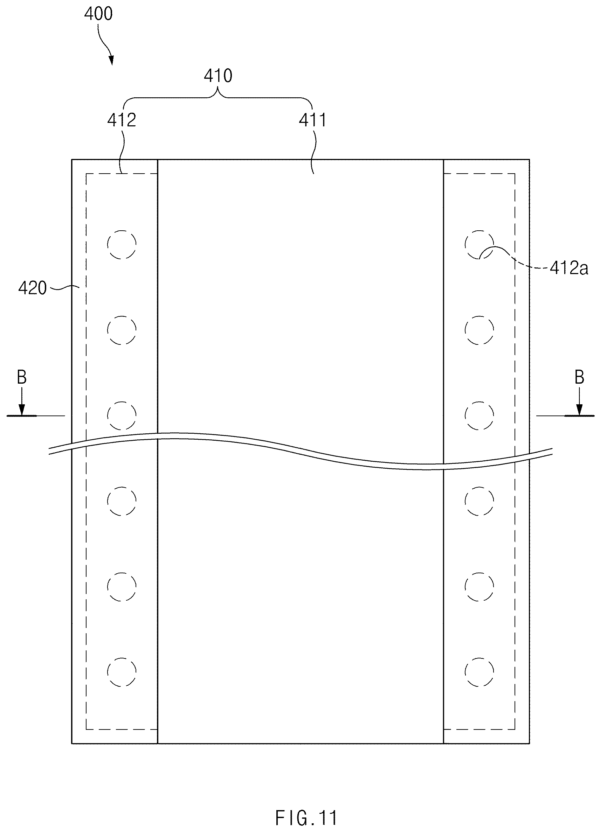

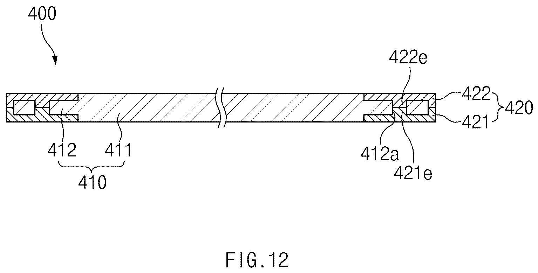

As illustrated in FIGS. 11 and 12, a secondary battery 10 according to a fourth embodiment of the present invention includes an electrode tab assembly 400. The electrode tab assembly 400 includes an electrode tab 410 and a reinforcing member 420 provided on a side portion 412 of the electrode tab 410.

Here, one or more insertion holes 412a are formed in the side portion 412 of the electrode tab 410, and the reinforcing member 420 is provided with an insertion protrusion to be inserted into each of the insertion holes 412a. The insertion protrusion includes one insertion protrusion 421e provided at one side of the reinforcing piece 421 and the other reinforcing protrusion 422e provided on the other reinforcing piece 422.

Thus, in the secondary battery 10 according to the fourth exemplary embodiment of the present invention, the insertion protrusion may be coupled to the insertion groove to improve coupling force between the electrode tab 410 and the reinforcing member 420.

### [Secondary battery according to fifth embodiment of the present invention]

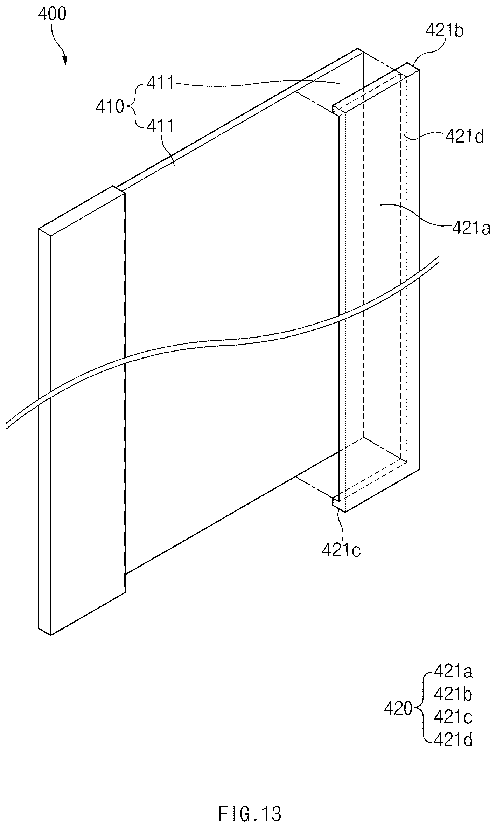

As illustrated in FIG. 13, a secondary battery 10 according to a fifth embodiment of the present invention includes an electrode tab assembly 400. The electrode tab assembly 400 includes an electrode tab 410 and a reinforcing member 420 provided on a side portion 412 of the electrode tab 410.

Here, the reinforcing member 420 may be provided only on one surface provided on the side portion of the electrode tab. That is, the reinforcing member 420 may be provided only in front of the side portion of the electrode tab when viewed in FIG. 13. Thus, the side portion of the electrode tab may increase in thickness to reinforce strength of the reinforcing member.

For example, the reinforcing member 420 may include a front surface 421a attached to a front side of the side portion 412, a top surface 421b attached to a top surface of the side portion 412, and a bottom surface 421c attached to a bottom surface of the side portion 412, and a side surface 421d provided on a side surface of the side portion.

Therefore, the secondary battery 10 according to the fifth embodiment of the present invention may include the reinforcing member on the one surface provided on the side portion of the electrode tab to increase in thickness of the side portion of the electrode tab, thereby reinforcing the strength of the side portion of the electrode tab.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

10: Secondary battery
100: Electrode assembly
110: Electrode
200: Can
300: Cap assembly
400: Electrode tab assembly
410: Electrode tab
411: Central portion
412: Side portion
412a: Insertion hole
420: Reinforcing member
421: One reinforcing piece
421a: Front surface
421b: One top surface
421c: One bottom surface
421d: One side surface
421e: Insertion protrusion
422: The other reinforcing piece
422a: Rear surface
422b: The other top surface
422c: The other bottom surface
422d: The other side surface
422e: Insertion protrusion
In view of the above, the present invention can be implemented according to the following itemized embodiment examples.
ITEM 1. An electrode tab assembly comprising:
   an electrode tab; and
   a reinforcing member provided on a side portion of the electrode tab in a width direction to reinforce strength of the side portion of the electrode tab, thereby preventing the electrode tab from being deformed.
ITEM 2. The electrode tab assembly of ITEM 1, wherein the reinforcing member comprises one reinforcing piece and the other reinforcing piece, which are respectively provided at front and rear sides of the side portion of the electrode tab and coupled to each other to surround the side portion of the electrode tab so that the electrode tab increases in thickness.
ITEM 3. The electrode tab assembly of ITEM 2, wherein the one reinforcing piece and the other reinforcing piece have a symmetrical shape with respect to the electrode tab.
ITEM 4. The electrode tab assembly of ITEM 2, wherein the one reinforcing piece comprises a front surface provided at a front side of the side portion, one top surface provided at one side of the side portion, one bottom surface provided at one side of a bottom surface of the side portion, and one side surface provided at one side of a side surface of the side portion, and
   the other reinforcing piece comprises a rear surface provided at a rear surface of the side portion, the other top surface provided at the other side of the side portion, the other bottom surface provided at the other side of the bottom surface of the side portion, and the other side surface provided at the other side of the side surface of the side portion.
ITEM 5. The electrode tab assembly of ITEM 4, wherein the one top surface and the other top surface are coupled to each other to cover the top surface of the side portion,
   the one bottom surface and the other bottom surface are coupled to each other to cover the bottom surface of the side portion, and
   the one side surface and the other side surface are coupled to each other to cover the side surface of the side portion.
ITEM 6. The electrode tab assembly of ITEM 1, wherein the electrode tab comprises a central portion and a side portion provided at each of both sides of the central portion in a full width direction of the central portion,
   wherein the side portion has a tapered shape having a thickness that gradually decreases from the inside to the outside, which are connected to the central portion.
ITEM 7. The electrode tab assembly of ITEM 1, wherein the electrode tab comprises a central portion and a side portion provided at each of both sides of the central portion in a full width direction of the electrode tab,
   wherein the side portion has a size less than that of the central portion in a full length and thickness direction of the central portion.
ITEM 8. The electrode tab assembly of ITEM 6 or 7, wherein an outer surface of the reinforcing member provided on the side portion and an outer surface of the central portion are provided on the same horizontal line.
ITEM 9. The electrode tab assembly of ITEM 1, wherein one or more insertion holes are formed in the side portion of the electrode tab, and
   the reinforcing member is provided with an insertion protrusion which is inserted into each of the insertion holes.
ITEM 10. The electrode tab assembly of ITEM 1, wherein the reinforcing member has strength greater than that of the electrode tab.
ITEM 11. The electrode tab assembly of ITEM 1, wherein the reinforcing member is made of any one material of an insulating material and a flexible material.
ITEM 12. The electrode tab assembly of ITEM 1, wherein the reinforcing member is made of a material having a thickness greater than that of the electrode tab.
ITEM 13. The electrode tab assembly of ITEM 1, wherein the reinforcing member is provided on one surface of the side portion of the electrode tab to increase in thickness of the side portion of the electrode tab, thereby reinforcing strength of the electrode tab.
ITEM 14. The electrode tab assembly of ITEM 13, wherein the reinforcing member comprises one front surface attached to a front side of the side portion, one top surface attached to a top surface of the side portion, and one bottom surface attached to a bottom surface of the side portion, and one side surface provided on a side surface of the side portion.
ITEM 15. A secondary battery comprising the electrode tab assembly of ITEM 1.

## Claims

1. An electrode tab assembly comprising:
an electrode tab; and
a reinforcing member provided on a side portion of the electrode tab in a width direction to reinforce strength of the side portion of the electrode tab, thereby preventing the electrode tab from being deformed,
wherein the electrode tab comprises a central portion and a side portion provided at each of both sides of the central portion in a full width direction of the central portion,
wherein the side portion has a tapered shape having a thickness that gradually decreases from the inside to the outside, which are connected to the central portion.

2. The electrode tab assembly of claim 1, wherein the reinforcing member comprises one reinforcing piece and the other reinforcing piece, which are respectively provided at front and rear sides of the side portion of the electrode tab and coupled to each other to surround the side portion of the electrode tab so that the electrode tab increases in thickness.

3. The electrode tab assembly of claim 2, wherein the one reinforcing piece and the other reinforcing piece have a symmetrical shape with respect to the electrode tab.

4. The electrode tab assembly of claim 2, wherein the one reinforcing piece comprises a front surface provided at a front side of the side portion, one top surface provided at one side of the side portion, one bottom surface provided at one side of a bottom surface of the side portion, and one side surface provided at one side of a side surface of the side portion, and
the other reinforcing piece comprises a rear surface provided at a rear surface of the side portion, the other top surface provided at the other side of the side portion, the other bottom surface provided at the other side of the bottom surface of the side portion, and the other side surface provided at the other side of the side surface of the side portion.

5. The electrode tab assembly of claim 4, wherein the one top surface and the other top surface are coupled to each other to cover the top surface of the side portion,
the one bottom surface and the other bottom surface are coupled to each other to cover the bottom surface of the side portion, and
the one side surface and the other side surface are coupled to each other to cover the side surface of the side portion.

6. The electrode tab assembly of claim 1, wherein the electrode tab comprises a central portion and a side portion provided at each of both sides of the central portion in a full width direction of the electrode tab,
wherein the side portion has a size less than that of the central portion in a full length and thickness direction of the central portion.

7. The electrode tab assembly of claim 6 or 7, wherein an outer surface of the reinforcing member provided on the side portion and an outer surface of the central portion are provided on the same horizontal line.

8. The electrode tab assembly of claim 1, wherein one or more insertion holes are formed in the side portion of the electrode tab, and
the reinforcing member is provided with an insertion protrusion which is inserted into each of the insertion holes.

9. The electrode tab assembly of claim 1, wherein the reinforcing member has strength greater than that of the electrode tab.

10. The electrode tab assembly of claim 1, wherein the reinforcing member is made of any one material of an insulating material and a flexible material.

11. The electrode tab assembly of claim 1, wherein the reinforcing member is made of a material having a thickness greater than that of the electrode tab.

12. The electrode tab assembly of claim 1, wherein the reinforcing member is provided on one surface of the side portion of the electrode tab to increase in thickness of the side portion of the electrode tab, thereby reinforcing strength of the electrode tab.

13. The electrode tab assembly of claim 13, wherein the reinforcing member comprises one front surface attached to a front side of the side portion, one top surface attached to a top surface of the side portion, and one bottom surface attached to a bottom surface of the side portion, and one side surface provided on a side surface of the side portion.

14. A secondary battery comprising the electrode tab assembly of claim 1.
